# EUROPÄISCHE PATENTSCHRIFT

(11) **EP 2 578 905 B1**
(45) Veröffentlichungstag und Bekanntmachung des Hinweises auf die Patenterteilung: **20.12.2017**
(21) Anmeldenummer: 12183995.5
(22) Anmeldetag: 12.09.2012
(51) Int. Cl.: F16H 59/04, F16H 61/26, F16H 59/02

(54) **Schaltanordnung für ein Handschaltgetriebe eines Kraftfahrzeugs**
Switching assembly for a manual gearbox of a motor vehicle
Agencement de commutation pour une boîte de vitesses manuelle d'un véhicule automobile

(30) Priorität: 05.10.2011 DE 102011084025
(43) Veröffentlichungstag der Anmeldung: 10.04.2013
(73) Patentinhaber: Bayerische Motoren Werke Aktiengesellschaft, 80809 München (DE)
(72) Erfinder: Ronner, Gerhard, 84104 Hebrontshausen (DE)

(56) Entgegenhaltungen:
- EP-A2- 0 825 367
- DE-A1- 19 805 510
- DE-A1- 19 842 620

## Beschreibung

Die Erfindung betrifft eine Schaltanordnung für ein Handschaltgetriebe, insbesondere eine Schaltanordnung für ein Handschaltgetriebe in einem Kraftfahrzeug sowie eine entsprechende Schaltgetriebeanordnung.

Schaltanordnungen dienen zur Betätigung eines Handschaltgetriebes durch einen Fahrer und ermöglichen diesem durch Bewegen eines Schalthebels einen gewünschten Gang des Handschaltgetriebes auszuwählen und diesen einzulegen.

Hierzu sind Schaltanordnungen bekannt, die eine derartige Übertragung einer Betätigungsbewegung von dem Schalthebel auf das Handschaltgetriebe beispielsweise mittels einer Kinematik bestehend aus miteinander gekoppelten Stangen und Gelenken ermöglichen und insbesondere bei längs im Fahrzeug eingebauten Handschaltgetrieben zum Einsatz kommen. Die Kinematik ermöglicht in der Regel eine direkte Anbindung des Schalthebels an das Handschaltgetriebe und erlaubt somit eine präzise und direkte Betätigung.

Nachteilig hieran wirkt sich jedoch aus, dass mittels der Kinematik nicht nur Betätigungsbewegungen des Schalthebels auf das Handschaltgetriebe übertragen werden können, sondern die Kinematik in entgegengesetzter Richtung ebenfalls eine direkte Verbindung zur Übertragung von Bewegungen des Motors bzw. des hiermit verbundenen Getriebegehäuses sowie Schwingungen dieser Elemente auf den Schalthebel überträgt. Besonders translatorische Bewegungen in einer Querrichtung des Fahrzeugs und Rotationen um eine Längsachse des Fahrzeugs sowie die im Betrieb auftretenden Schwingungen führen zu besonders kritischen Anregungen der Schaltanordnung und speziell des Schalthebels, so dass dieser entsprechend mitbewegt oder selbst in Schwingung versetzt wird. Da insbesondere der Schalthebel die Schnittstelle zu den Passagieren bzw. dem Fahrer dargestellt, wird jede Übertragung von spürbaren Bewegungen oder Schwingungen auf dieses Bauteil von den Passagieren als unangenehm oder sogar störend wahrgenommen, so dass eine erhebliche Beeinträchtigung des Fahrkomfort hervorgerufen wird.

Es sind daher Entkopplungsmaßnahmen bekannt, um die auftretenden Bewegungen und Schwingungen zu dämpfen bzw. zu kompensieren, jedoch beeinträchtigen diese gleichzeitig eine direkte Schaltbarkeit bzw. ein entsprechend direktes Schaltgefühl. Beispielsweise werden Elastomere an dem Schalthebel, insbesondere zwischen Schalthebeloberteil und einem Schalthebelunterteil, vorgesehen oder Lagerstellen der Schaltanordnung mit Elastomeren ausgebildet, um die auftretenden Schwingungen zu dämpfen bzw. die entsprechenden Bauteile voneinander zu entkoppeln.

Diese widersprüchlichen Funktionsanforderungen einer möglichst effektiven Schwingungsentkopplung einerseits und einer möglichst direkten und präzisen Schaltbarkeit andererseits sind daher nur schwer zu erfüllen und erfordern stets eine Kompromissfindung. Insbesondere bei Dieselmotoren mit entsprechend hohem Anregungspegel stellt ein derartiger Kompromiss zur Lösung des Zielkonflikts eine besondere Herausforderung dar.

Beispielsweise ist aus der EP 0 825 367 A2, die alle Merkmale des Oberbegriffs des Anspruchs 1 offenbart, eine Betätigungseinrichtung für ein Kraftfahrzeuggetriebe bekannt, welches zur Aufgabe hat, dass ein Schalthebel seine Lage beibehält, während sich das Kraftfahrzeuggetriebe im Raum bewegen kann. Aufgabe der Erfindung ist es daher eine Schaltanordnung bereitzustellen, welche einerseits eine direkte Schaltbarkeit ermöglicht und andererseits eine Übertragung von Bewegungen oder Schwingungen auf den Schalthebel zumindest reduziert.

Die Aufgabe wird erfindungsgemäß gelöst mittels einer Schaltanordnung mit den Merkmalen des unabhängigen Patentanspruchs 1 sowie einer Schaltgetriebeanordnung mit den Merkmalen des unabhängigen Patentanspruchs 3. Vorteilhafte Ausgestaltungsformen ergeben sich aus den jeweils zugehörigen abhängigen Ansprüchen.

Demnach wird eine Schaltanordnung für ein Handschaltgetriebe eines Kraftfahrzeugs vorgeschlagen mit:
- einem Schaltarm,
- einem Schalthebel, und
- einer Schaltstange,
wobei der Schalthebel ein erstes freies Ende zum Betätigen des Schalthebels umfasst und an einem dem ersten Ende entgegengesetzten zweiten Ende mit der Schaltstange zum Übertragen einer Betätigungsbewegung des Schalthebels auf das Handschaltgetriebe verbunden ist, wobei der Schalthebel außerdem über ein zwischen dem ersten Ende und dem zweiten Ende angeordnetes Gelenk schwenkbar mit dem Schaltarm gekoppelt und der Schaltarm um eine Längsachse des Schaltarms schwenkbar gelagert ist, wobei die Längsachse und das Gelenk derart beabstandet voneinander angeordnet sind, so dass eine Schwenkbewegung des Schaltarms um die Längsachse ein Verschwenken des Gelenks umfasst.

Unter dem Verschwenken des Gelenks wird im Sinne der Erfindung eine Bewegung des Gelenks bzw. eine Bewegung seiner Aufnahme verstanden, nicht jedoch ein Betätigen des Gelenks. Vorzugsweise ist der Schaltarm dazu ausgestaltet, die Aufnahme für das Gelenk bereitzustellen, die beabstandet zu der Längsachse ist. Beispielsweise umfasst der Schaltarm hierzu einen Seitenarm, der sich von der Längsachse weg erstreckt und an einem hiervon entfernten Ende die Aufnahme für das Gelenk aufweist.

Die Beabstandung des Gelenks von der Längsachse und/oder eine Länge des Seitenarms sind in Abstimmung auf die auftretenden Bewegungen und Schwingungen sowie einer Dimensionierung der gesamten Schaltanordnung abzustimmen.

Die vorgeschlagene Schaltanordnung stellt aufgrund der beschriebenen Anordnung einen Drehfreiheitsgrad des Schaltarms bereit, der einerseits eine kinematische Schwingungsentkopplung für den Schalthebel bzw. dessen erstes Ende ermöglicht und andererseits eine direkte und präzise Schaltbarkeit über die Schaltstange erhalten bleibt.

Zusätzlich umfasst die Schaltanordnung mindestens zwei Stützstäbe, welche jeweils an einem ersten Ende mittels mindestens eines ersten Gelenks mit dem Schaltarm gekoppelt und an einem entgegengesetzten zweiten Ende mittels mindestens eines zweiten Gelenks mit dem Handschaltgetriebe zum Bereitstellen einer Viergelenkanordnung verbindbar sind.

Beispielsweise können die jeweiligen Gelenke an den ersten und/oder an den zweiten Enden als Kugelgelenke und/oder Schwenk- bzw. Drehgelenke, also einachsige Gelenke, ausgebildet sein.

Außerdem kann der Schaltarm einen sich quer zu der Längsrichtung erstreckten Querträger zum Verbinden der jeweils ersten Enden der Stützstäbe mit dem Schaltarm umfassen.

Des Weiteren wird eine Schaltgetriebeanordnung für ein Kraftfahrzeug mit einem Handschaltgetriebe und einer Schaltanordnung vorgeschlagen, wobei die Schaltanordnung gemäß der voranstehend und nachfolgend noch gegebenen Beschreibung ausgebildet ist.

Hierbei kann gemäß einer Ausführungsform der Schaltgetriebeanordnung der Schaltarm an einem ersten Ende zumindest horizontal und/oder vertikal schwenkbar und/oder um seine Längsachse drehbar mit dem Kraftfahrzeug verbindbar sowie an einem dem ersten Ende entgegengesetzten zweiten Ende horizontal und/oder vertikal schwenkbar und/oder um seine Längsachse des Schaltarms drehbar mit dem Handschaltgetriebe gekoppelt sein. Die genannten Richtungsangaben beziehen sich selbstverständlich auf einen im Fahrzeug verbauten Zustand. Es können Lagerungen an dem jeweiligen Ende zum Lagern des Schaltarms vorgesehen werden, welche die entsprechende Beweglichkeit des Schaltarms bereitstellen. Mittels der Drehbarkeit um die Längsachse kann das beschriebene Schwenken des Schaltarms um dessen Längsachse ermöglicht werden. Die horizontale und/oder vertikale Schwenkbarkeit des ersten und/oder zweiten Endes erlaubt dagegen eine im Wesentlichen translatorische Bewegung eines Endes des Schaltarms gegenüber seinem anderen Ende.

Gemäß einer alternativen Ausführungsform ist der Schaltarm an einem ersten Ende und an einem entgegengesetzten zweiten Ende des Schaltarms zumindest schwenkbar um die Längsachse des Schaltarms mit dem Kraftfahrzeug verbindbar. Dies bedeutet, dass der Schwenkarm an beiden Stellen mit dem Fahrzeug mittels geeignet ausgeführter Lagerungen verbunden ist. Vorzugsweise sind die Lagerungen hierzu derart ausgebildet, dass diese zumindest eine Schwenkbewegung des Schaltarms um die Längsachse des Schaltarms zulassen.

In beiden Ausführungsformen können beispielsweise Elastomerlager als Lagerungen eingesetzt werden.

Ferner können die Stützstäbe derart mit dem Handschaltgetriebe und dem Schaltarm verbunden sein, dass eine Schwenkbewegung des Handschaltgetriebes um eine Fahrzeuglängsachse und/oder eine translatorische Bewegung des Handschaltgetriebes in einer Fahrzeugquerrichtung eine Schwenkbewegung des Schaltarms um dessen Längsachse in einer der Bewegung des Handschaltgetriebes entgegengesetzten Richtung bewirkt. Wird also das Gehäuse des Handschaltgetriebes aus einer Ausgangsstellung zu einer linken Seite bewegt, so wird der Schaltarm zumindest um seine Längsachse in entgegengesetzter Richtung geschwenkt. Entsprechend umgekehrt wird der Schaltarm um seine Längsachse geschwenkt, wenn sich das Schaltgetriebe nach rechts bewegt wird.

Ebenfalls vorzugsweise sind die Stützstäbe derart mit dem Handschaltgetriebe und dem Schaltarm verbunden, dass diese gemeinsam mittels der mindestens einen ersten und zweiten Gelenke eine Viergelenkanordnung bilden zum Bereitstellen der Schwenkbewegung des Schaltarms in der der Bewegung entgegengesetzten Richtung.

Des Weiteren kann beispielsweise die mit dem zweiten Ende des Schalthebels verbundene Schaltstange das zweite Ende des Schalthebels bei einer Schwenkbewegung des Schaltarms derart führen, dass das erste Ende des Schalthebels im Wesentlichen ortsfest bezüglich des Fahrzeugs bleibt.

Die Erfindung wird nachfolgend anhand eines Ausführungsbeispiels unter Bezugnahme auf die beigefügten Zeichnungen näher erläutert. Hierin zeigen:
Fig. 1 eine isometrische Ansicht eines Ausführungsbeispiels einer erfindungsgemäßen Schaltgetriebeanordnung,
Fig. 2 eine Seitenansicht der erfindungsgemäßen Schaltgetriebeanordnung aus Fig. 1,
Fig. 3 eine Hinteransicht der erfindungsgemäßen Schaltgetriebeanordnung aus Fig. 1 bzw. Fig. 2,
Fig. 4 eine Draufsicht auf die erfindungsgemäßen Schaltgetriebeanordnung aus Fig. 1 bis 3, und
Fig. 5 eine Bewegung der Schaltgetriebeanordnung in einer Abfolge von drei Ansichten.

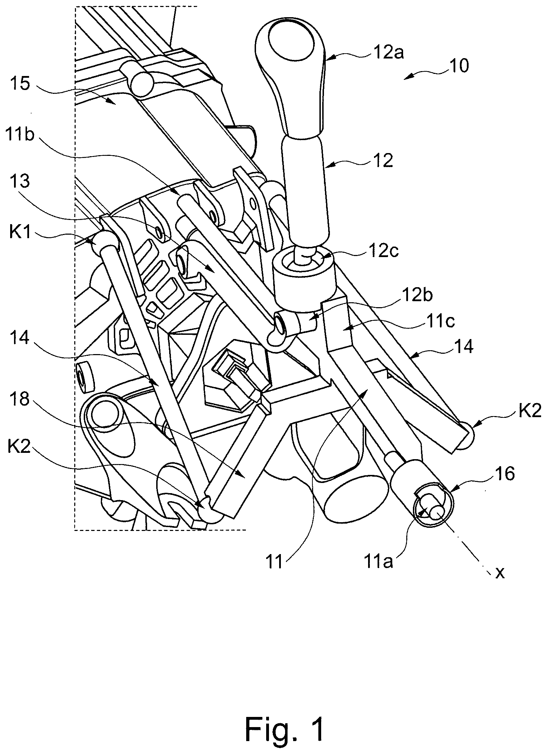

- Fig. 1: bis 4 zeigen verschiedene Ansichten eines Ausführungsbeispiels einer erfindungsgemäßen Schaltgetriebeanordnung 10 mit einer Schaltanordnung umfassend einen Schaltarm 11, einen Schalthebel 12 und eine Schaltstange 13. Des Weiteren umfasst die Schaltanordnung zwei Stützstäbe 14 zum Verbinden der Schaltanordnung mit einem Gehäuse eines Handschaltgetriebes 15.

In der dargestellten Ausführungsform umfasst der Schalthebel 12 ein erstes freies Ende 12a mit einem Schaltknauf zum Betätigen des Schalthebels 12. An einem dem ersten Ende 12a entgegengesetzten zweiten Ende 12b ist der Schalthebel 12 mit der Schaltstange 13 zum Übertragen einer Betätigungsbewegung des Schalthebels 12 auf das Handschaltgetriebe 15 verbunden. Hierzu ist der Schalthebel 12 außerdem über ein zwischen dem ersten Ende 12a und dem zweiten Ende 12b angeordnetes Gelenk 12c schwenkbar mit dem Schaltarm 11 gekoppelt. Das Gelenk 12c ist beispielsweise als Kugelgelenk ausgeführt und erlaubt somit eine Kippen des Schalthebels 12 in Längsrichtung x des Fahrzeugs sowie ein seitliches Kippen zum Auswählen und Einlegen einer gewünschten Fahrstufe. Die Kippbewegungen werden entsprechend als seitliches Verschwenken bzw. als Zug- oder Druckbewegung auf die Schaltstange 13 übertragen, welche direkt bzw. gelenkig mit dem Schaltgetriebe 15 verbunden ist.

Der Schaltarm 11 ist als längserstrecktes Bauteil ausgeführt und gemäß der dargestellten Ausführungsform mit seiner Längsachse x' im Wesentlichen in Fahrzeuglängsrichtung x ausgerichtet. Zusätzlich ist der Schaltarm 11 um seine Längsachse x' schwenkbar gelagert. Dies wird beispielsweise durch eine entsprechend ausgebildete erste Lagerung 16 zum Verbinden des Schaltarms 11 mit dem Fahrzeug (nicht dargestellt) an einem ersten Ende 11a des Schaltarms 11, sowie einer entsprechend ausgebildeten zweiten Lagerung (ebenfalls nicht dargestellt) erreicht, die einem dem ersten Ende 11a entgegengesetzt angeordneten zweiten Ende 11b zugeordnet ist. Hierbei kann die dem zweiten Ende 11b zugeordnete zweite Lagerung entweder mit dem Fahrzeug verbunden sein oder vorzugsweise das zweite Ende 11b des Schaltarms 11 mit dem Gehäuse des Schaltgetriebes 15 verbinden. Die beiden Lagerungen sind hierzu zumindest als Drehlager ausgebildet, so dass der Schaltarm 11 in den Lagerungen drehbar und somit um seine Längsachse geschwenkt werden kann. Zusätzlich können die Lagerungen derart ausgebildet sein, dass diese ein seitliches Verschwenken des Schaltarms 11 in einer horizontalen und/oder vertikalen Richtung ermöglichen. Dies ist beispielsweise erforderlich, wenn sich das Handschaltgetriebe 15 relativ zu dem Fahrzeug entsprechend bewegt.

Des Weiteren sind die Längsachse x' des Schaltarms 11 und das Gelenk 12c um einen Abstand z beabstandet voneinander angeordnet, so dass eine Schwenkbewegung des Schaltarms 11 um dessen Längsachse x' ein Verschwenken des Gelenks 12c umfasst. Dies bedeutet, dass der Schaltarm 11 beispielsweise einen Seitenarm 11c umfasst, der mit einem ersten Ende starr mit dem Schaltarm 11 verbunden ist und an einem entgegengesetzten zweiten Ende mit dem Gelenk 12c mittels einer Aufnahme derart verbunden ist, dass sich der Schalthebel 12 relativ zu dem Schaltarm 11 um das Gelenk 12c bewegen, insbesondere schwenken, lässt.

Mittels dieser Anordnung ist es möglich, dass der Schaltarm 11 um seine Längsachse x' geschwenkt und das Gelenk 12c bzw. dessen Aufnahme aufgrund der Beabstandung (Abstand z) mittels des Seitenarms 11c ebenfalls um die Längsachse des Schaltarms 11 verschwenkt wird.

Ferner sind die zwei Stützstäbe 14 vorgesehen, welche jeweils an einem ersten Ende mittels eines ersten Gelenks, beispielsweise des dargestellten Kugelgelenks K1, mit dem Schaltarm 11 gekoppelt und an einem entgegengesetzten zweiten Ende mittels eines zweiten Gelenks, beispielsweise ebenfalls als Kugelgelenk K2 ausgebildet, mit dem Gehäuse des Handschaltgetriebe 15 verbunden sind. Auf diese Weise wird eine Viergelenkanordnung bereitgestellt, die eine Rotationsbewegung des Gehäuses des Handschaltgetriebes 15 über die Stützstäbe 14 auf den Schaltarm 11 übertragen. Hierzu umfasst der Schaltarm 11 optional einen Querträger 18, der sich quer zu der Längsachse x' des Schaltarms 11 mit jeweils einem Ende wegerstreckt. Der Querträger 18 ist lediglich beispielsweise als V- bzw. U-förmig dargestellt, kann aber ebenso andere geeignete Formen aufweisen, insbesondere lediglich stabförmig ausgebildet sein. Die jeweiligen ersten und/oder zweiten Gelenke der Stützstäbe ermöglichen eine Gelenkverbindung mit dem Stützarm bzw. dem Gehäuse des Schaltgetriebes und können neben den dargestellten Kugelgelenken beispielsweise auch als Schwenk- bzw. Drehgelenke ausgebildet sein, insbesondere können die Drehgelenke gemäß einer nicht dargestellten Ausführungsform an dem ersten Ende zum Verbinden mit dem Schaltarm vorgesehen sein, wobei eine Drehachse der Drehgelenke beispielsweise in Fahrzeugquerrichtung ausgerichtet sein kann.

Es wird somit eine Viergelenkanordnung bereitgestellt, bestehend aus dem Gehäuse des Schaltgetriebes 15, den beiden Stützstäben 14 sowie dem Schaltarm 11 bzw. dessen Querträger 18. In der dargestellten Ausführungsform wird in bevorzugter Weise somit eine Trapez-förmige Anordnung bereitgestellt, die eine vorteilhafte Kraftübertragung von dem Gehäuse des Schaltgetriebes 15 auf den Schaltarm 11 ermöglicht. Hierzu erstrecken sich die beiden Stützstäbe 14 im Wesentlichen V-förmig von dem Getriebegehäuse weg, hin zu dem Querträger 18 des Schaltarms 11. Somit kann bei einer Rotationsbewegung um die Fahrzeuglängsachse x oder einer translatorischen Bewegung des Getriebegehäuses quer zu der Fahrzeuglängsachse x eine Druckkraft optimal auf den Schaltarm 11 (bzw. hier: auf den Querträger 18) übertragen werden.

Wie beschrieben, kann die Lagerung des Schaltarms 11 einerseits an dem Fahrzeug und andererseits entweder an dem Gehäuse des Schaltgetriebes 15 oder ebenfalls an dem Fahrzeug erfolgen. Ist der Schaltarm 11 jedoch gemäß der einen Ausführungsform an dem Gehäuse des Handschaltgetriebes gelagert, so ergibt sich die Besonderheit, dass der Schaltarm 11 mit seinem zweiten Ende 11b mit dem Gehäuse des Schaltgetriebes 15 mitbewegt und somit an seinem ersten Ende 11a in der Lagerung 16 horizontal bzw. vertikal quer zur Fahrzeuglängsachse x verschwenkt wird. Mittels der Viergelenkanordnung wird gleichzeitig (je nach Bewegungsrichtung des Schaltgetriebegehäuses) die genannte Druckkraft über einen der beiden Stützstäbe 17 auf den Schaltarm 11 übertragen, so dass dieser ein Drehmoment erfährt und somit gleichzeitig zu der Querbewegung seines zweiten Endes 11b zusätzlich um seine Längsachse geschwenkt wird.

Zusätzlich können die Stützstäbe 14 zum Einleiten eines Drehmoments auf den Schaltarm 11 um einen Winkel *α* gekippt zu der Längsachse x' des Schaltarms 11 ausgerichtet sein.

Die Schwenkbewegung um seine Längsachse x' des Schaltarms 11 führt sodann zu der bereits voranstehend beschriebenen Verschwenkung des Gelenks 12c, so dass der zugehörige Teil des Schalthebels 12 ebenfalls bewegt wird.

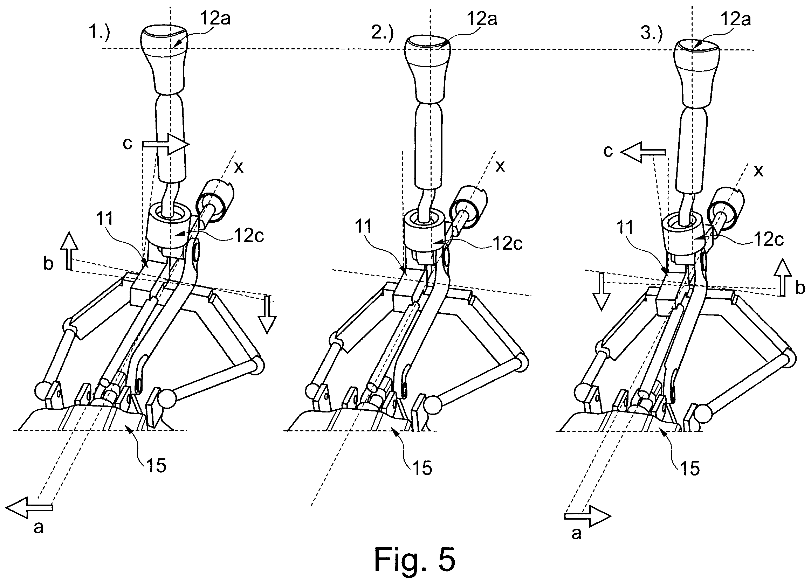

Ein hierdurch angeregtes Schwingen des gesamten Schalthebels 12 und somit auch des ersten Endes 12a des Schalthebels 12 wird nun mittels der Kopplung des zweiten Endes 12b des Schalthebels 12 mit dem Handschaltgetriebe 15 über die Schaltstange 13 erzielt. Diese ist mit ihren beiden Enden gelenkig mit dem Handschaltgetriebe 15 bzw. dem zweiten Ende 12b des Schalthebels 12 verbunden und ist somit zwar in mehrere Richtungen beweglich, gibt jedoch einen festen Bewegungsradius vor, so dass das zweite Ende 12b des Schalthebels 12 im Zusammenspiel mit der gesamten voranstehend beschriebenen Kinematik lediglich in einem definierten Bereich bewegbar ist. Hierbei sind die Elemente derart aufeinander abgestimmt, dass der Schalthebel 12 vorzugsweise in einer nahezu senkrechten Ausrichtung (bezogen auf einen in einem Fahrzeug verbauten Zustand) angeordnet ist und bleibt. Dies bedeutet, dass zwar eine Bewegung nahezu aller Elemente möglich ist, jedoch eine Bewegung des ersten Endes 12a des Schalthebels kinematisch kompensiert wird, wie nachfolgend in Fig. 5 beschrieben ist.

Mittels der beschriebenen Schaltgetriebeanordnung 10 bzw. der hierin eingesetzten Schaltanordnung wird also eine kinematische Kompensation bereitgestellt, die eine Übertragung einer Schwingungsanregung ausgehend von dem Handschaltgetriebe in den Schalthebel verhindert oder zumindest reduziert. Es sind daher keine oder zumindest gegenüber bekannten Systemen weniger Entkopplungselemente (nicht dargestellt) notwendig. Insbesondere betrifft dies Entkopplungselemente in dem Schalthebel und/oder in entsprechenden Lagerstellen. Somit wird eine Funktionsauslegung eines Schaltkomforts hinsichtlich einer Präzision und einem möglichst direkten Schaltgefühl erleichtert und ein Zielkonflikt bzw. eine Kompromissfindung mit Bezug auf eine Schwingungsentkopplung einerseits und einer möglichst direkten und präzisen Schaltbarkeit andererseits entschärft.

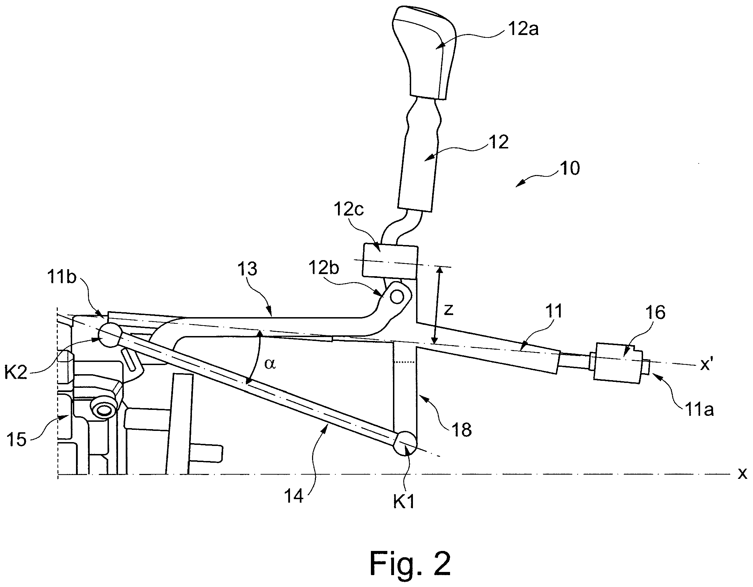

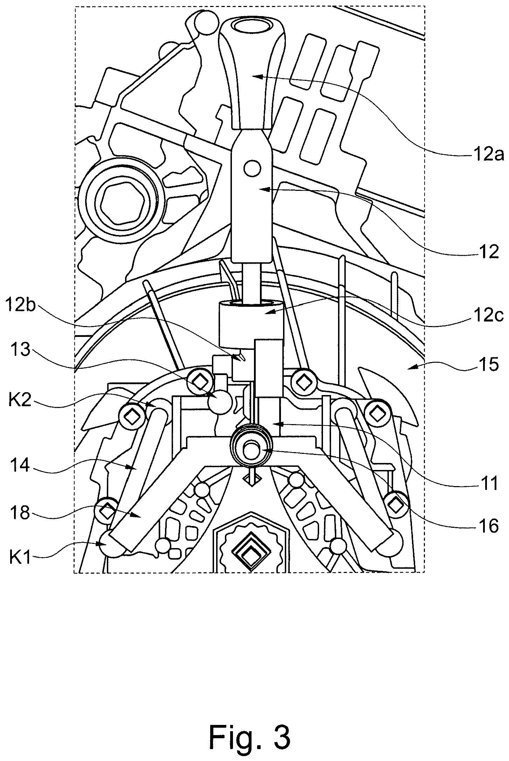

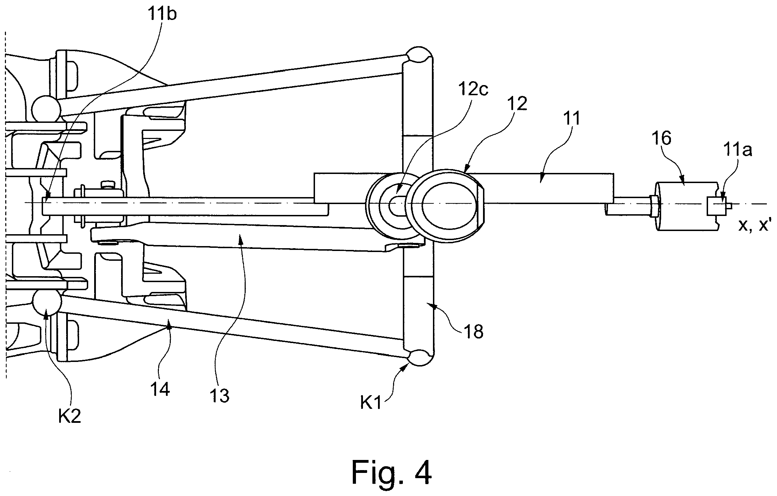

Fig. 5 zeigt eine Bewegung der Schaltgetriebeanordnung 10 aus den Fig. 1 bis 4 in einer Abfolge von drei Ansichten 1.) bis 3.). Ansicht 2.) zeigt die Schaltgetriebeanordnung in einer nicht-ausgelenkten Ausgangsstellung. In Ansicht 1.) ist das Handschaltgetriebe 15 gegenüber der Ausgangsstellung (gestrichelte Linien) nach links quer zu der Fahrzeuglängsrichtung x bewegt (Pfeil a). Dies führt gemäß der obigen Beschreibung zumindest zu einem Verschwenken des Schaltarms 11 um dessen Längsachse (Pfeil b) in einer Drehrichtung entgegengesetzt zu der Bewegungsrichtung des Gehäuses des Handschaltgetriebes 15 (Pfeil a). Mit der Schwenkbewegung des Schaltarms 11 wird ebenfalls das Gelenk 12c verschwenkt. Der Schaltknauf 12a am ersten Ende des Schalthebels bleibt trotz der Bewegungen innerhalb der Kinematik nahezu unverändert positioniert.

Gleiches gilt für ein Bewegen des Gehäuses des Handschaltgetriebes 15 nach rechts quer zu der Fahrzeuglängsachse x (Pfeil a). In diesen Fall wird der Schaltarm 11 um seine Längsachse entgegengesetzt geschwenkt (Pfeil b) und somit das Gelenk 12 c bewegt (Pfeil c). Erkennbar ist eine hierbei auftretende Schräglage des Schalthebels, wobei der Schaltknauf 12a am ersten Ende des Schalthebels trotz dieser Bewegungen innerhalb der Kinematik nahezu unverändert positioniert bleibt.

Erfolgt also eine Hin- und Her-Bewegung (Pfeile a) des Gehäuses des Handschaltgetriebes 15 gemäß den Ansichten 1.) bis 3.) so wird der Schaltarm 11 und der Schalthebel zumindest verschwenkt, jedoch verbleibt das dem Fahrer des Fahrzeugs zugewandte erste Ende des Schalthebels nahezu unbewegt, so dass eine wahrnehmbare Übertragung der Bewegungen und der Schwingungen verhindert oder deutlich reduziert werden kann. Selbstverständlich können zusätzliche Dämpfungselemente vorgesehen werden, um gegebenenfalls auftretende Restbewegungen zu kompensieren.

## Patentansprüche

1. Schaltanordnung für ein Handschaltgetriebe eines Kraftfahrzeugs mit
- einem Schaltarm (11),
- einem Schalthebel (12), und
- einer Schaltstange (13),
wobei der Schalthebel (12) ein erstes freies Ende (12a) zum Betätigen des Schalthebels (12) umfasst und an einem dem ersten Ende (12a) entgegengesetzten zweiten Ende (12b) mit der Schaltstange (13) zum Übertragen einer Betätigungsbewegung des Schalthebels (12) auf das Handschaltgetriebe (15) verbunden ist, wobei der Schalthebel (12) außerdem über ein zwischen dem ersten Ende (12a) und dem zweiten Ende (12b) angeordnetes Gelenk (12c) schwenkbar mit dem Schaltarm (11) gekoppelt und der Schaltarm (11) um eine Längsachse (x') des Schaltarms (11) schwenkbar gelagert ist, wobei die Längsachse (x') und das Gelenk (12c) derart beabstandet voneinander angeordnet sind (z), so dass eine Schwenkbewegung des Schaltarms (11) um die Längsachse (x') ein Verschwenken des Gelenks (12c) um die Längsachse des Schaltarms (11) umfasst **dadurch gekennzeichnet, dass** die Schaltanordnung mindestens zwei Stützstäbe (14) umfasst, welche jeweils an einem ersten Ende mittels mindestens eines ersten Gelenks (K1) mit dem Schaltarm (11) gekoppelt und an einem entgegengesetzten zweiten Ende mittels mindestens eines zweiten Gelenks (K2) mit dem Handschaltgetriebe (15) zum Bereitstellen einer Viergelenkanordnung verbindbar sind.

2. Schaltanordnung nach Anspruch 1, wobei der Schaltarm (11) einen sich quer zu der Längsrichtung (x') erstreckten Querträger (18) zum Verbinden der jeweils ersten Enden der Stützstäbe (14) mit dem Schaltarm (11) umfasst.

3. Schaltgetriebeanordnung für ein Kraftfahrzeug mit einem Handschaltgetriebe (15) und einer Schaltanordnung, wobei die Schaltanordnung nach einem der Ansprüche 1 bis 2 ausgebildet ist.

4. Schaltgetriebeanordnung nach Anspruch 3, wobei der Schaltarm (11) an einem ersten Ende (11a) zumindest horizontal und/oder vertikal schwenkbar und/oder um die Längsachse (x') drehbar mit dem Kraftfahrzeug verbindbar, sowie an einem dem ersten Ende (11a) entgegengesetzten zweiten Ende (11b) zumindest horizontal und/oder vertikal schwenkbar und/oder um die Längsachse (x') des Schaltarms (11) drehbar mit dem Handschaltgetriebe (15) gekoppelt ist.

5. Schaltgetriebeanordnung nach Anspruch 3, wobei der Schaltarm (11) an einem ersten Ende (11a) und an einem entgegengesetzten zweiten Ende (11b) des Schaltarms (11) zumindest schwenkbar um die Längsachse (x') des Schaltarms (11) mit dem Kraftfahrzeug verbindbar ist.

6. Schaltgetriebeanordnung nach einem der Ansprüche 3 bis 5, wobei die Stützstäbe (14) derart mit dem Handschaltgetriebe (15) und dem Schaltarm (11) verbunden sind, dass eine Schwenkbewegung des Handschaltgetriebes (15) um eine Fahrzeuglängsachse (x) und/oder eine translatorische Bewegung des Handschaltgetriebes in einer Fahrzeugquerrichtung zumindest eine Schwenkbewegung des Schaltarms (11) um dessen Längsachse (x') in einer der Bewegung des Handschaltgetriebes (15) entgegengesetzten Richtung bewirkt.

7. Schaltgetriebeanordnung nach einem der Ansprüche 3 bis 6, wobei die Stützstäbe (14) derart mit dem Handschaltgetriebe (15) und dem Schaltarm (11) verbunden sind, dass diese gemeinsam mittels der mindestens einen ersten und zweiten Gelenke (K1, K2) eine Viergelenkanordnung bilden zum Bereitstellen der Schwenkbewegung des Schaltarms (11) in der der Bewegung des Handschaltgetriebes entgegengesetzten Richtung.

8. Schaltgetriebeanordnung nach einem der Ansprüche 3 bis 7, wobei die mit dem zweiten Ende (12b) des Schalthebels (12) verbundene Schaltstange (13) das zweite Ende (12b) des Schalthebels (12) bei einer Schwenkbewegung des Schwenkarms (11) derart führt, dass das erste Ende (12a) des Schalthebels (12) im Wesentlichen ortsfest bezüglich des Fahrzeugs bleibt.

## Claims

1. A gearshift assembly for a manual gearbox of a motor vehicle, having
- a gearshift arm (11),
- a gearshift lever (12), and
- a gearshift rod (13),
wherein the gearshift lever (12) comprises a first free end (12a) for actuating the gearshift lever (12) and is connected at a second end (12b) opposite to the first end (12a) to the gearshift rod (13) for transmitting an actuating movement of the gearshift lever (12) to the manual gearbox (15), wherein the gearshift lever (12) furthermore is coupled pivotably with the gearshift arm (11) via an articulation (12c) arranged between the first end (12a) and the second end (12b), and the gearshift arm (11) is mounted pivotably about a longitudinal axis (x') of the gearshift arm (11), wherein the longitudinal axis (x') and the articulation (12c) are arranged spaced apart from each other (z) in such a way that a pivoting movement of the gearshift arm (11) about the longitudinal axis (x') comprises pivoting of the articulation (12c) about the longitudinal axis of the gearshift arm (11), **characterised in that** the gearshift assembly comprises at least two supporting rods (14) which in each case are coupled with the gearshift arm (11) at a first end by means of at least one first articulation (K1) and can be connected to the manual gearbox (15) at an opposite second end by means of at least one second articulation (K2) to provide a four-articulation arrangement.

2. A gearshift assembly according to Claim 1, wherein the gearshift arm (11) comprises a cross member (18) extended transversely to the longitudinal direction (x') for connecting the first ends in each case of the supporting rods (14) to the gearshift arm (11).

3. A manual gearbox assembly for a motor vehicle with a manual gearbox (15) and a gearshift assembly, wherein the gearshift assembly is formed in accordance with one of Claims 1 to 2.

4. A manual gearbox assembly according to Claim 3, wherein the gearshift arm (11) at a first end (11a) can be connected to the motor vehicle so as to be at least horizontally and/or vertically pivotable and/or rotatable about the longitudinal axis (x'), and also is coupled to the manual gearbox (15) at a second end (11b) opposite to the first end (11a) so as to be at least horizontally and/or vertically pivotable and/or rotatable about the longitudinal axis (x') of the gearshift arm (11).

5. A manual gearbox assembly according to Claim 3, wherein the gearshift arm (11) at a first end (11a) and at an opposite second end (11b) of the gearshift arm (11) can be connected to the motor vehicle at least so as to be pivotable about the longitudinal axis (x') of the gearshift arm (11).

6. A manual gearbox assembly according to one of Claims 3 to 5, wherein the supporting rods (14) are connected to the manual gearbox (15) and the gearshift arm (11) in such a way that a pivoting movement of the manual gearbox (15) about a longitudinal vehicle axis (x) and/or a translatory movement of the manual gearbox in a transverse direction of the vehicle brings about at least a pivoting movement of the gearshift arm (11) about the longitudinal axis (x') thereof in a direction opposed to the movement of the manual gearbox (15).

7. A manual gearbox assembly according to one of Claims 3 to 6, wherein the supporting rods (14) are connected to the manual gearbox (15) and the gearshift arm (11) in such a way that these jointly by means of the at least one first and second articulations (K1, K2) form a four-articulation arrangement to provide the pivoting movement of the gearshift arm (11) in the direction opposed to the movement of the manual gearbox.

8. A manual gearbox assembly according to one of Claims 3 to 7, wherein the gearshift rod (13) connected to the second end (12b) of the gearshift lever (12) guides the second end (12b) of the gearshift lever (12) upon a pivoting movement of the pivot arm (11) in such a way that the first end (12a) of the gearshift lever (12) remains substantially stationary with respect to the vehicle.

## Revendications

1. Dispositif de commutation destiné à une boîte de vitesses manuelle d'un véhicule automobile comprenant :
- un bras de commutation (11),
- un levier de commutation (12), et
- une tige de commutation (13),
le levier de commutation (12) ayant une première extrémité libre (12a) permettant de le manoeuvrer, et étant relié, à la tige de commutation (13) par sa seconde extrémité (12b) opposée à sa première extrémité (12a) pour permettre de transmettre un mouvement de manoeuvre du levier de commutation (12) à la boîte de vitesses manuelle (15), le levier de commutation (12) étant en outre connecté, de façon à pouvoir pivoter au bras de commutation (11), par l'intermédiaire d'une articulation (12c) montée entre la première extrémité (12a) et la seconde extrémité (12b), le bras de commutation (11) étant monté pivotant autour de son axe longitudinal (x') et, l'axe longitudinal (x') et l'articulation (12c) étant situés à une distance (z) telle qu'un pivotement du bras de commutation (11) autour de l'axe longitudinal (x') entraîne un pivotement de l'articulation (12c) autour de l'axe longitudinal du bras de commutation (11),
**caractérisé en ce qu'**
il comporte au moins deux barres support (14) qui sont respectivement connectés à une première extrémité et par l'intermédiaire d'au moins une première articulation (K1) au bras de commutation (11), et peuvent être reliées à leur seconde extrémité opposée à celle-ci, et par l'intermédiaire d'au moins une seconde articulation (K2) à la boîte de vitesses manuelle (15) de façon à définir en parallélogramme déformable.

2. Dispositif de commutation conforme à la revendication 1,
dans lequel le bras de commutation (11) comporte une traverse (18) s'étendant transversalement à la direction longitudinale (x') pour permettre de relier les premières extrémités respectives des barres support (14) au bras de commutation (11).

3. Dispositif de boîte de vitesses destiné à un véhicule automobile comprenant une boîte de vitesses manuelle (15) et un dispositif de commutation, réalisé conformément à l'une des revendications 1 et 2.

4. Dispositif de boîte de vitesses conforme à la revendication 3,
dans lequel le bras de commutation (11) peut être relié au véhicule, à une première extrémité (11a) en étant susceptible de pivoter au moins horizontalement et/ou verticalement et/ou en étant mobile en rotation autour de l'axe longitudinal (x'), et est connecté à la boîte de vitesses manuelle (15) à sa seconde extrémité (11b) opposée à la première extrémité (11a) en étant susceptible de pivoter au moins horizontalement et/ou verticalement et/ou en étant mobile en rotation autour de l'axe longitudinal (x') du bras de commutation (11).

5. Dispositif de boîte de vitesses conforme à la revendication 3,
dans lequel le bras de commutation (11) peut être relié au véhicule automobile à une première extrémité (11a) et à la seconde extrémité (11b) opposée à celle-ci en étant au moins mobile en pivotement autour de son axe longitudinal (x').

6. Dispositif de boîte de vitesses conforme à l'une des revendications 3 à 5,
dans lequel les barres support (14) sont reliées à la boîte de vitesses manuelle (15) et au bras de commutation (11) de sorte qu'un mouvement de pivotement de la boîte de vitesses manuelle (15) autour de l'axe longitudinal du véhicule (x) et/ou qu'un mouvement de translation de la boîte de vitesses manuelle dans la direction transversale du véhicule entraîne au moins un mouvement de pivotement du bras de commutation (11) autour de son axe longitudinal (x') dans la direction opposée au déplacement de la boîte de vitesses manuelle (15).

7. Dispositif de boîte de vitesses conforme à l'une des revendications 3 à 6,
dans lequel les barres support (14) sont reliées à la boîte de vitesses manuelle (15) et au bras de commutation (11) de façon à définir, avec la première et la seconde articulations (K1, K2) un parallélogramme déformable pour permettre le pivotement du bras de commutation (11) dans la direction opposée au déplacement de la boîte de vitesses manuelle.

8. Dispositif de boîte de vitesses conforme à l'une des revendications 3 à 7,
dans lequel la tige de commutation (13) reliée à la seconde extrémité (12b) du levier de commutation (12) guide la seconde extrémité (12b) du levier de commutation (12) lors d'un pivotement du bras de commutation (11) de sorte que la première extrémité (12a) du levier de commutation (12) reste essentiellement fixe par rapport au véhicule.
